# EUROPÄISCHE PATENTSCHRIFT

(11) **EP 0 683 073 B1**
(45) Veröffentlichungstag und Bekanntmachung des Hinweises auf die Patenterteilung: **22.07.1998**
(21) Anmeldenummer: 95106624.0
(22) Anmeldetag: 03.05.1995
(51) Int. Cl.: B60R 21/06

(54) **Vorrichtung zur schutzweisen Abtrennung des Raumes hinter dem Vorder- oder Hintersitz eines Personenkraftfahrzeugs**
A partitioning device for protecting the compartment behind the front or rear seat of a motor vehicle
Séparation de protection de l'espace en arrière du siège avant ou arrière d'un véhicule

(30) Priorität: 10.05.1994 DE 4416456
(43) Veröffentlichungstag der Anmeldung: 22.11.1995
(73) Patentinhaber: Flögel, Peter, S-24131 Eslöv (SE)
(72) Erfinder: Flögel, Peter, S-24131 Eslöv (SE)
(74) Vertreter: Patentanwälte Hauck, Graalfs, Wehnert, Döring, Siemons

(56) Entgegenhaltungen:
- DE-A- 3 635 992
- DE-A- 4 128 555
- FR-A- 1 257 096
- US-A- 3 214 211

## Beschreibung

Die Erfindung bezieht sich auf eine Vorrichtung zur schutzweisen Abtrennung des Raums hinter dem Vorder- oder Hintersitz eines Personenkraftwagens nach dem Oberbegriff des Patentanspruchs 1.

Aus DE-A-36 35 992 ist eine Vorrichtung zur schutzweisen Abtrennung der eingangs genannten Art bekanntgeworden, bei der ein Schutzrahmen aus steifem Material in einen unteren und einen oberen Abschnitt unterteilt ist, wobei der obere Abschnitt in dem unteren teleskopisch verstellbar geführt ist zweck Verstellung des Schutzrahmens. Aus DE-A-41 28 555 ist ein ähnlicher Schutzrahmen bekanntgeworden, bei dem der untere Abschnitt in einer Führung an der Rückseite der Lehne verstellbar geführt ist, um auch im heruntergeklappten Zustand der Lehne einen Schutzrahmen bilden zu können. In beiden bekannten Fällen ist der obere Rahmenabschnitt an der Karosserie lösbar befestigbar.

Der Erfindung liegt die Aufgabe zugrunde, eine Vorrichtung zur schutzweisen Abtrennung des Raums hinter den Vorder- oder Hintersitzen eines Personenkraftfahrzeugs zu schaffen, der auch bei höheren Kräften ihre Schutzwirkung beibehält.

Diese Aufgabe wird durch die Merkmale des Patentanspruchs 1 gelöst.

Bei der erfindungsgemäßen Vorrichtung ist an einem seitlichen Ansatz am oberen Rahmenabschnitt eine teleskopisch längenverstellbare, in beliebiger Länge fest einstellbare Strebe angelenkt zur Befestigung des Rahmenabschnitts an einer hinteren Säule oder einem Teil der Karosserie. Die Säule ist zumeist der stabilste Teil im Aufbau einer Karosserie, so daß mit Hilfe der Strebe hohe Kräfte auf den Schutzrahmen wirken können, ohne daß er nachgibt. Hierbei wird die Strebe allein auf Zug beansprucht, kann daher erhebliche Kräfte auf die Stütze oder Säule nach hinten übertragen. Der seitliche Ansatz ermöglicht eine entsprechende Raumausnutzung im Bereich des Personenkraftwagens für den Schutzrahmen, so daß auch seitlich Teile nicht von dem einen Abteil in das andere treten können, beispielsweise bei starken Bremsmanövern oder einem Aufprall oder dergleichen. Gleichzeitig werden dadurch die Streben nach außen verlagert nahe an die Innenseite der Karosserie, so daß eine Einschränkung des vorhandenen Laderaums nicht stattfindet. Die Radkästen verschmälern üblicherweise den Innenraum. Die beschriebene Konstruktion trägt diesem Umstand Rechnung.

Häufig ist die Rückenlehne der hinteren Sitze geteilt. Daher sieht eine Ausgestaltung der Erfindung vor, daß jedem Rückenlehnenabschnitt ein getrennter Schutzrahmen zugeordnet ist.

Wie erwähnt, kann der obere Rahmenabschnitt mit Hilfe von Schrauben oder einer Schnappverbindung mit dem Dach oder seitlich mit der Säule der Karosserie verbunden werden.

Die Rückenlehne hat in aller Regel eine Neigung nach hinten. Hätte der obere Rahmenabschnitt die gleiche Neigung, würde dadurch eine Verkleinerung des Laderaums stattfinden. Daher sieht eine Ausgestaltung der Erfindung vor, daß die unteren zugekehrten Enden der teleskopisch zusammenwirkenden Profilabschnitte so ausgebildet sind, daß der obere Rahmenabschnitt mit dem unteren einen stumpfen Winkel bildet und der obere Rahmenabschnitt in der oberen Stellung vertikal angeordnet ist. Die einander zugekehrten Enden der Hohlprofile können nach einer weiteren Ausgestaltung der Erfindung durch eine Schraubverbindung verbunden sein, die relativ stabil ausgeführt werden kann. In diesem Fall kann der Schutzrahmen die Funktion eines Überrollbügels übernehmen.

In zahlreichen Personenkraftwagen des Caravantyps können die Rückenlehnen der Hintersitze nach vorn geklappt werden, um den Laderaum zu vergrößern. Daher sieht eine Ausgestaltung der Erfindung vor, daß der untere Rahmenabschnitt in einer zweiten Stellung auf der Rückseite der nach vorn geklappten Rückenlehne aufstehend an dieser lösbar anbringbar ist. Bei nach vorn geklappter Rückenlehne steht mithin der Rahmenabschnitt an dem freien Ende der Rückenlehne auf, etwa im Winkel von 90°. Der obere Rahmenabschnitt, der nunmehr eine weiter vorn liegende Position hat (hinter den Vordersitzen), ist an dieser Stelle ebenfalls in geeigneter Weise mit der Karosserie zu verbinden, beispielsweise mit der Decke oder den Säulen der Karosserie mit Hilfe einer geeigneten Schnapp- oder Schraubverbindung oder dergleichen. Die Unterseite des unteren Rahmenabschnitts ist in dieser Position ebenfalls in geeigneter Weise an der Rückenlehne anzubringen.

Um eine Lagerveränderung der erfindungsgemäßen Schutzvorrichtung in der beschriebenen Art und Weise leicht vorzunehmen, sieht eine Ausgestaltung der Erfindung vor, daß in der Rückenlehne eine Führung angebracht ist, an der ein Führungsabschnitt des unteren Rahmenabschnitts gleitend verstellbar ist zwischen einem Anschlag im unteren Bereich und einem Anschlag im oberen Bereich der Rückenlehne. Wird die Rückenlehne nach vorn geklappt, kann der komplette Rahmen der Führung entlanggleiten und in der neuen Stellung fixiert werden, wie oben beschrieben. Im Prinzip reicht aus, wenn der untere Rahmenabschnitt an einem Anschlag der Führung anliegt. Es kann jedoch auch zweckmäßig sein, zwischen Rahmenabschnitt und Führung geeignete Schnappverbindungsmittel vorzusehen, um den unteren Rahmenabschnitt in der eingenommenen Stellung zu halten.

Wie erwähnt, kann bei einer geteilten Ausführung der Rückenlehne nur ein Rückenlehnenabschnitt nach vorn geklappt sein, während der andere seine hochgeklappte Stellung behält. Auch in diesem Fall ist die erfindungsgemäße Schutzvorrichtung wirksam einzusetzen. Um eine Stabilisierung zwischen den beiden Schutzrahmen für die Rückenlehnenabschnitte vorzusehen, schlägt eine Ausgestaltung der Erfindung vor, daß eine Verbindungsstrebe zwischen den Schutzrahmenabschnitten vorgesehen ist. Diese kann an den Enden seitliche Ansätze aufweisen, die passend in das Hohlprofil der oberen Rahmenabschnitte eingreifen. Die Verbindungsstrebe kann auch dazu dienen, eine ein Netz aufweisende Rolle zu lagern. Das Netz kann dann nach Art eines Rollos heruntergezogen werden bis zum Boden des Kraftfahrzeugs und an diesem in geeigneter Weise befestigt werden. Dadurch ist auch eine schützende Abtrennung zwischen den beiden Rücksitzen geschaffen.

Ausführungsführungsbeispiele der Erfindung werden nachfolgend anhand von Zeichnungen näher erläutert.
- Fig. 1: zeigt eine Rückansicht eines Ausführungsbeispiels der erfindungsgemäßen Schutzvorrichtung in der hinteren Position.
- Fig. 2: zeigt die Rückansicht der Schutzvorrichtung nach Fig. 1 in der vorderen Position.
- Fig. 3: zeigt die Rückansicht der Vorrichtung nach Fig. 1 mit dem linken Abschnitt in der hinteren und dem rechten Abschnitt in der vorderen Position.
- Fig. 4: zeigt eine Seitenansicht der Darstellung nach Fig. 3 in Richtung Pfeil 4.
- Fig. 5: zeigt eine Einzelheit der Schutzvorrichtung nach den Figuren 1 bis 4.
- Fig. 6: zeigt eine weitere Einzelheit der Schutzvorrichtung nach den Figuren 1 bis 4.
- Fig. 7: zeigt eine Einzelheit zur Anbringung von Streben.

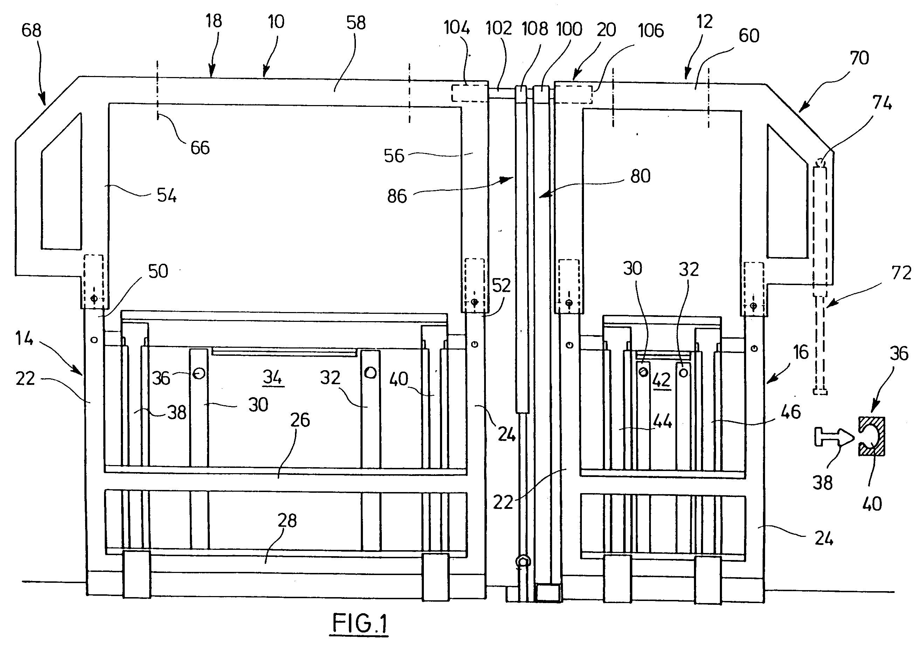

In den Figuren 1 bis 4 sind zwei Schutzrahmen 10, 12 dargestellt, die aus einem unteren Rahmenabschnitt 14 bzw. 16 und einem oberen Rahmenabschnitt 18 bzw. 20 bestehen. Der untere Rahmenabschnitt 14 bzw. 16 ist mit zwei parallelen Streben 22, 24 versehen, die mit Querstreben 26, 28 verbunden sind. Die Streben 22 bis 28 bestehen aus Hohlprofilmaterial, beispielsweise einem Kastenprofil. Mit den Querstreben 26, 28 sind ferner Befestigungsstreben 30, 32 verbunden, die parallel und im Abstand zu den Streben 22, 24 verlaufen. Sie dienen zur Befestigung an einer nur schematisch dargestellten Rückenlehne der Rücksitze eines PKW, zum Beispiel des Caravantyps. Die Befestigung kann zum Beispiel mittels einer Schnappverbindung 36 erfolgen, wie sie in Fig. 1 getrennt herausgestellt ist mit einem Dorn 38, der in eine federnde Ausnehmung 40 mit Hinterschnitt einrastet. Mit der Querstrebe 28 sind Gleitschuhe verbunden (nicht zu sehen), die in kanalartigen Führungen 38, 40 gleiten. In der in Fig. 1 dargestellten Position liegen die Schuhe gegen einen Anschlag in der Führung 38, 40 und stützen daher den Rahmen 10 nach unten ab. Die Schnappverbindungen 36 halten den unteren Rahmenabschnitt 14 gegen die entsprechend ausgebildete Rückseite der Rückenlehne 34. Die Führungsschienen 38, 40 sind vorzugsweise in die Rückenlehne 34 eingelassen.

Die Anbringung des unteren Rahmenteils 16 am getrennten Rücksitz 42 ist analog wie die des unteren Rahmenabschnitts 14, wobei am Rücksitz 42 ebenfalls Führungsschienen 44, 46 eingelassen sind. Die Schnappverbindung 36 ist in gleicher Weise vorgesehen. Bis in Höhe der Oberkante der Sitze 34, 42 kann der untere Rahmenabschnitt 14, 16 ausgekleidet sein, um zum Beispiel die Führungsschienen zu verdecken.

Die Streben 22, 24 haben eine freie Verlängerung 50, 52, die in entsprechende Streben 54, 56 des oberen Rahmenabschnitts 18 teleskopisch eingreifen. In den Figuren 1 bis 4 ist der obere Rahmenabschnitt 18 bzw. 20 komplett herausgezogen gezeigt. Er kann jedoch abgesenkt werden, wobei die obere Querstrebe 58 bzw. 60 etwa in Höhe der Oberseite der Rückenlehne 34, 42 ist.

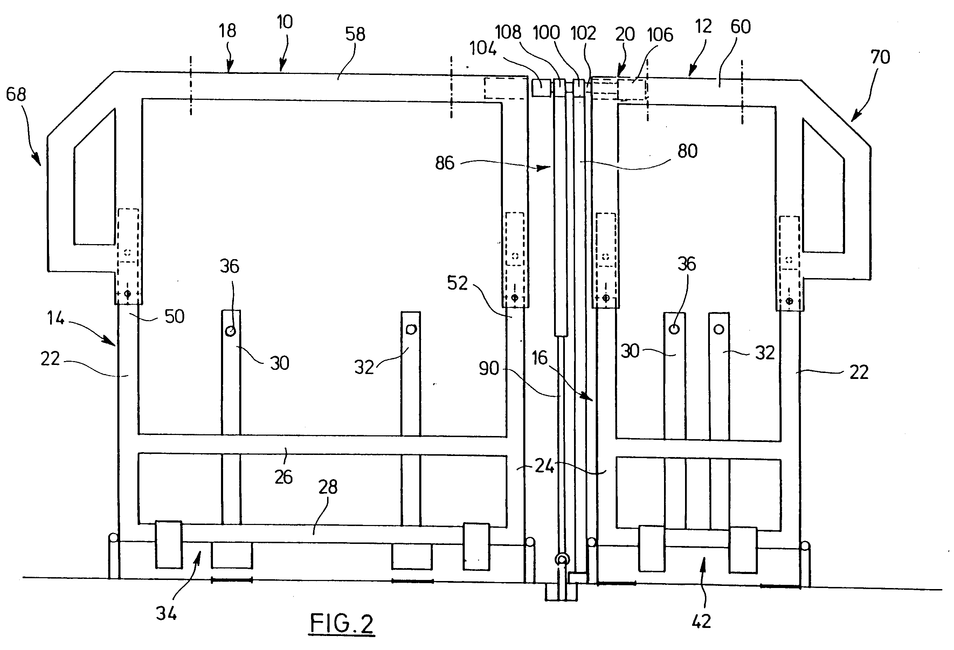

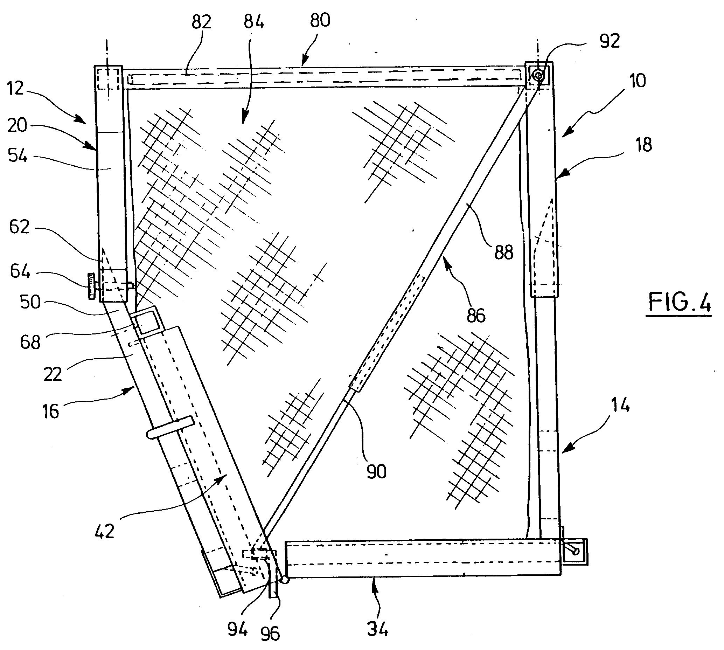

Wie aus Fig. 4 zu ersehen, ist das Ende des Abschnitts 50 angeschrägt, wie gestrichelt bei 62 zu sehen. Dadurch kann der obere Rahmenabschnitt 20 in die Vertikale geschwenkt werden, während der untere Rahmenabschnitt 16 entsprechend der Neigung der Rückenlehne 42 angeordnet ist. Im Verbindungsbereich kann eine stabile Schraube 64 vorgesehen werden, um unteren und oberen Rahmenabschnitt 16, 20 fest miteinander zu verbinden, und zwar sowohl in der Position nach Fig. 1 als auch der nach Fig. 2 (siehe auch Fig. 4). Dafür ist indessen erforderlich, zwei unterschiedliche Durchgangslöcher im Abschnitt 50, 52 vorzusehen.

Die Querstreben 58, 60 können, wie strichpunktiert bei 66 angedeutet, mit der Decke der Karosserie verschraubt oder über eine Schnappverbindung verbunden werden. Zusätzlich oder alternativ ist es möglich, die oberen Rahmenabschnitte 18, 20 über seitliche Ansätze 68, 70 seitlich mit einer Säule der Karosserie über eine Schraub- oder Schnappverbindung lösbar zu verbinden. Der Ansatz 68, 70 ist mit einer Teleskopstange 72 gelenkig verbunden, wie bei 74 angedeutet, wobei die Teleskopstange 72 horizontal im Fahrzeug verlaufend mit einer hinteren Säule oder einem anderen Teil der Karosserie verbunden ist. Hierzu ist jedoch erforderlich, daß die Länge der Teleskopverbindung 72 beliebig fest einstellbar ist.

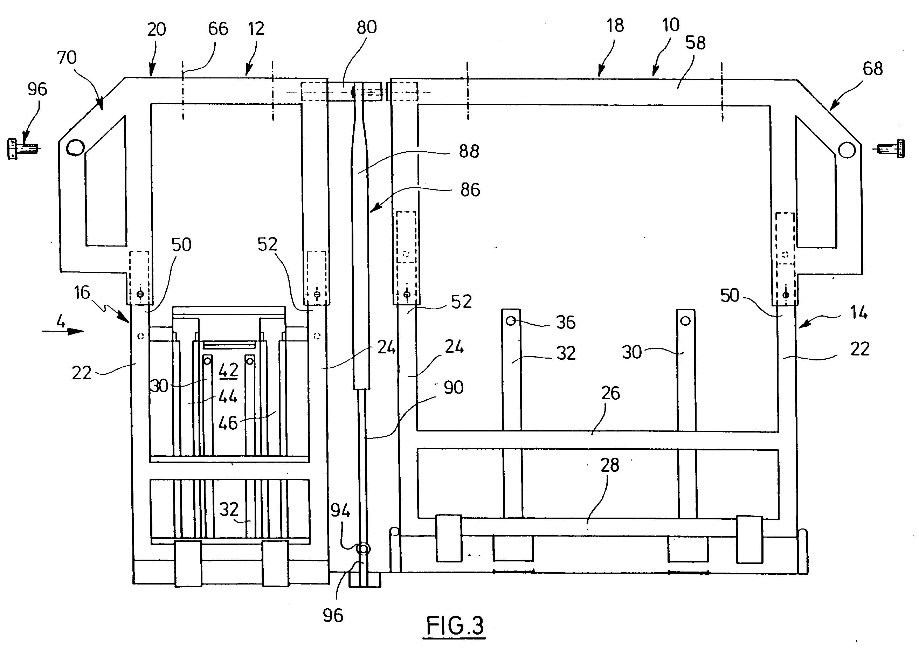

Bei der Ausführungsform nach Fig. 1 befinden sich die Schutzrahmen 10, 12 an der Rückseite der Rückenlehnen der Hintersitze mit der Anlage der Rahmenabschnitte 14, 16 an der Rückseite der Rückenlehne. Bei der Ausführungsform nach Fig. 2 sind die Rückenlehnen 34, 42 in Richtung Vordersitze geklappt. Die Rahmen 18, 20 werden mit Hilfe der nicht gezeigten Führungsschuhe entlang den Führungsschienen 38, 40 bzw. 44, 46 nach vorn geschoben gegen einen Anschlag (nicht gezeigt), wodurch sich die Rahmen 18, 20 hinter den Vordersitzen im freien Kantenbereich der nach vorn geklappten Rückenlehne befinden. Sie werden in dieser Position ebenfalls an der Decke oder über die seitlichen Ansätze 68, 70 an einer Säule befestigt. Außerdem kann eine lösbare Fixierung des unteren Rahmenabschnitts 14, 16 vorgesehen werden, um ein Nachhintenbewegen zu verhindern. Diese Position der Schutzrahmen ist in Fig. 2 dargestellt. Eine dritte ist in den Figuren 3 und 4 wiedergegeben.

Man erkennt aus den Figuren 3 und 4, daß der Rahmen 12 die gleiche Position hat wie bei der Stellung nach Fig. 1, d.h. hinter der hochgeklappten Rückenlehne des einen Rücksitzes. Der zweite Rahmen 10 hat indessen eine Position, wie sie aus Fig. 2 hervorgeht, d.h. vorgeschoben hinter den Vordersitzen (wie ersichtlich, sind die Vordersitze und auch die Position der Rücksitze der Karosserie sowie die Karosserieteile nicht dargestellt). Zwischen den Rahmen 10, 12 ist mithin ein Abstand geschaffen, wie er in Fig. 4 ersichtlich ist. Dadurch ergibt sich eine Lücke, durch die vom Laderaum zum Sitzraum der Kabine ein Durchtritt von Gegenständen möglich ist. Um diesen zu verhindern, ist eine Verbindungsstrebe 80 vorgeschlagen (Fig. 4) die an den Enden seitliche Ansätze aufweist, welche in entsprechende Hohlprofile der Streben 58 (siehe auch Fig. 3) eingreifen. Die Verbindungsstrebe 80 stützt die Rahmen 10, 12 gegeneinander. In der Strebe 80, die ebenfalls hohl ausgeführt ist, ist eine Rolle gelagert, wie gestrichelt bei 82 angedeutet. Auf dieser ist ein Netz 84, zum Beispiel aus Kohlenstoffasern, aufgerollt. Das Netz kann nach Art eines Rollos von der Rolle 82 abgezogen und in geeigneter Weise am Boden des Fahrzeugs befestigt werden (Befestigung nicht gezeigt).

In Fig. 4 ist schließlich zu erkennen, daß eine Teleskopstange 86, die aus einem Rohr 88 und einer darin verschiebbar aufgenommenen Stange 90 besteht, am oberen Ende bei 92 an der Verbindungsstrebe 80 angelenkt ist. Das untere Ende der Stange 90 weist eine Öse (gestrichelt gezeichnet) auf, die mit 94 bezeichnet ist und auf einen Haken 96 am Boden des Fahrzeugs aufschiebbar ist. Die Teleskopstange ist ebenfalls ein Hindernis für den Durchtritt durch den Zwischenraum zwischen den Rahmen 10, 12.

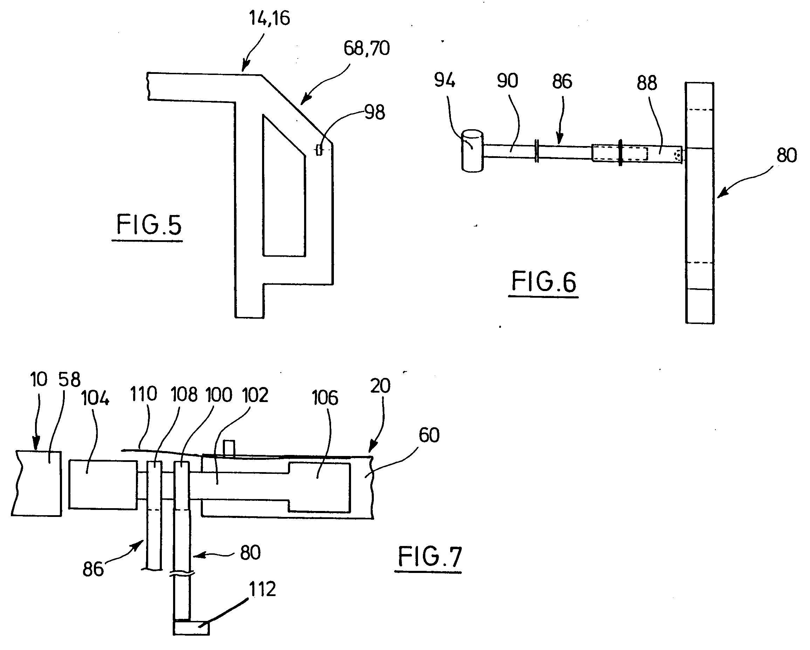

In Fig. 3 sind Schrauben 96 mit Rändelkopf angedeutet. Sie können, wie bei der Ausführungsform nach Fig. 5 andeutungsweise gezeigt ist, von dem Ansatz 68, 70 aufgenommen werden, wie bei 98 dargestellt. Auf diese Weise läßt sich besonders einfach die Anbringung des oberen Rahmenabschnitts 14, 16 an einer Säule der Karosserie bewerkstelligen.

In Fig. 6 ist die Verbindungsstrebe 80 mit angelenkter Teleskopstrebe 86 getrennt dargestellt.

Fig. 7 zeigt eine Abringung der Verbindungsstrebe 80 ständig über einen Ring 100 an einer runden Stange 102, die an den Enden Einschubstücke 104, 106 trägt. Über einen Ring 108 ist auch das Teleskoprohr 86 angelenkt. Fig. 7 gibt die Anordnung für die Position nach Fig. 2 wieder, in der beide Rahmenteile 10, 20 hinter den Vorderseiten angeordnet sind. Das rechte Stück 106 ist vollständig in das Hohlprofil 60 eingeschoben und das linke gibt das Profil 58 frei. Über beiden ist eine Blattfeder 110 angebracht mit einem mittig angeschweißten Zapfen, der in einen Schlitz (nicht gezeigt) des Profils 60 eingreift und in diesem durch geeignete Maßnahmen verriegelbar ist. Am unteren Ende der Verbindungsstrebe ist ein Klotz 112 um die Achse der Strebe 80 verschwenkbar gelagert, um wahlweise in das zugehörige untere Hohlprofil eingesteckt zu werden.

Die Rahmenteile können in geeigneter Weise ausgefüllt sein, z.B. mit einem Gitter, einem Geflecht aus Draht oder Textilfasern oder dergleichen, um die Schutzwirkung bei kleineren Gegenständen zu entfalten.

## Patentansprüche

1. Vorrichtung zur schutzweisen Abtrennung des Raumes hinter den Vorder- und Hintersitzen eines Personenkraftfahrzeugs, mit folgenden Merkmalen:
a) ein Schutzrahmen (10, 12) aus steifem Material ist in einen unteren und oberen Abschnitt (14, 16, 18, 20) unterteilt, welche Abschnitte aneinandergeführt teleskopisch verstellbar sind zwecks Höhenverstellung des Schutzrahmens (10, 12);
b) der untere Rahmenabschnitt (14, 16) ist in der hochgeklappten Stellung der Rückenlehne (34, 42) des Hintersitzes an der Rückseite der Rückenlehne (34, 42) an dieser flächig anliegend fixierbar;
c) der obere Rahmenabschnitt (18, 20) ist zwischen einer unteren Stellung, in der er weitgehend von der Rückenlehne (34, 42) verdeckt ist und einer oberen Stellung, in der er bis zum Dach der Karosserie reicht, verstellbar und
d) der obere Rahmenabschnitt (18, 20) ist in der oberen Stellung an einem Abschnitt der Karosserie lösbar befestigbar, dadurch gekennzeichnet, daß an einem seitlichen Ansatz (68, 70) am oberen Rahmenabschnitt (18, 20) eine teleskopisch längenverstellbare, in beliebiger Länge fest einstellbare Strebe (72) angelenkt ist zur Befestigung des Rahmenabschnitts an einer hinteren Säule oder einem anderen Teil der Karosserie.

2. Vorrichtung nach Anspruch 1, dadurch gekennzeichnet, daß bei einer geteilten Rückenlehne (34, 42) jeder ein Schutzrahmen (10, 12) zugeordnet ist.

3. Vorrichtung nach Anspruch 1 oder 2, dadurch gekennzeichnet, daß der Schutzrahmen (10, 12) aus Hohlprofilstangenmaterial hergestellt ist und die teleskopische Verbindung von oberem und unterem Rahmenabschnitt (14, 16, 18, 20) durch ineinanderschiebbare Stangenabschnitte gebildet ist.

4. Vorrichtung nach einem der Ansprüche 1 bis 3, dadurch gekennzeichnet, daß der obere Rahmenabschnitt (18, 20) mit mindestens einer Schraube (66) oder einer Schnappverbindung (36) mit dem Dach oder einer seitlichen Säule der Karosserie verbindbar ist.

5. Vorrichtung nach einem der Ansprüche 1 bis 4, dadurch gekennzeichnet, daß der obere Rahmenabschnitt (18, 20) am oberen Ende auf der der Karosserie zugekehrten Seite einen rohrförmigen Ansatz (68, 70) hat.

6. Vorrichtung nach einem der Ansprüche 1 bis 5, dadurch gekennzeichnet, daß die einander zugekehrten Enden der teleskopisch zusammenwirkenden Profilabschnitte so ausgebildet sind, daß der obere Rahmenabschnitt (28) mit dem unteren einen stumpfen Winkel bildet und der obere Rahmenabschnitt (28) annähernd vertikal angeordnet ist, wenn er in der oberen Stellung ist.

7. Vorrichtung nach Anspruch 6, dadurch gekennzeichnet, daß die Enden der Hohlprofile über eine Schraubverbindung (64) gegeneinander festlegbar sind.

8. Vorrichtung nach einem der Ansprüche 1 bis 7, dadurch gekennzeichnet, daß der untere Rahmenabschnitt (14, 16) in einer zweiten Stellung auf der Rückseite der nach vorn gekippten Rückenlehne (34, 42) aufstehend an dieser lösbar anbringbar ist.

9. Vorrichtung nach Anspruch 8, dadurch gekennzeichnet, daß in der Rückenlehne (34, 42) eine Führung (38, 40, 44, 46) angebracht ist, an der ein Führungsabschnitt des unteren Rahmenabschnitts (14, 16) gleitend verstellbar ist zwischen einem Anschlag im unteren und einem Anschlag im oberen Bereich der Rückenlehne (34, 42).

10. Vorrichtung nach Anspruch 9, dadurch gekennzeichnet, daß die Führung von mindestens zwei parallel beabstandeten kanalartigen Schienen gebildet sind, in denen Gleitschuhe oder dergleichen des unteren Rahmenabschnitts (14, 16) geführt sind.

11. Vorrichtung nach Anspruch 2 und einem der Ansprüche 8 bis 10, dadurch gekennzeichnet, daß bei einem Schutzrahmen (10) in der vorderen und einem Schutzrahmen (12) in der hinteren Stellung die oberen Rahmenabschnitte (18, 20) über eine Verbindungsstrebe (80) verbindbar sind.

12. Vorrichtung nach Anspruch 11, dadurch gekennzeichnet, daß die Strebe (80) an den Enden annähernd senkrecht abstehende Abschnitte aufweist, die annähernd passend in das Hohlprofil der oberen Rahmenabschnitte (18, 20) eingreifen.

13. Vorrichtung nach Anspruch 11 oder 12, dadurch gekennzeichnet, daß in der oberen Verbindungsstrebe (80) eine ein abrollbares Netz (84) oder dergleichen aufweisende Rolle (82) gelagert ist und an der unteren Kante des Netzes (84) Mittel vorgesehen sind zur Anbringung am Boden der Karosserie.

14. Vorrichtung nach einem der Ansprüche 11 bis 13, dadurch gekennzeichnet, daß an einem Ende der Strebe (80) eine Teleskopstange (86) angelenkt ist, die sich von dem oberen Randabschnitt (18) in der vorderen Stellung zu einer Anbringestelle (96) im Bereich der hochgeklappten Rückenlehne erstreckt.

15. Vorrichtung nach einem der Ansprüche 1 bis 14, dadurch gekennzeichnet, daß zwischen dem unteren Rahmenabschnitt (14, 16) und der Rückseite der Rückenlehne (34, 42) Schnappverbindungsmittel (36, 48) wirken, um den unteren Rahmenabschnitt (14, 16) in der Anlage an der Rückenlehne (34, 42) zu halten.

## Claims

1. A device for the protective partitioning of the compartment behind the front and rear seats of a motor vehicle, with the following features:
a) a protective frame (10, 12) of rigid material is subdivided into a lower and an upper section (14, 16, 18, 20), these sections being telescopically adjustably guided on one another for the purpose of adjusting the height of the protective frame (10, 12);
b) the lower frame section (14, 16) in the folded up position of the back rest (34, 42) of the rear seat can be fixed to the rear side of the back rest (34, 42) lying flatly against this;
c) the upper frame section (18, 20) is adjustable between a lower position in which it is largely covered by the back rest (34, 42) and an upper position in which it reaches up to the roof of the car body, and
d) the upper frame section (18, 20) is releasably fastenable in the upper position to a section of the car body, characterised in that on one lateral projection (68, 70) on the upper frame section (18, 20) there is linked a telescopically length-adjustable strut (72) which can be permanently set to any length for fastening the frame section to the rear column or another part of the car body.

2. A device according to claim 1, characterised in that with a partitioned back rest (34, 42) to each one there is allocated a protective frame (10, 12).

3. A device according to claim 1 or 2, characterised in that the protective frame (10, 12) is manufactured from hollow profile rod material and the telescopic connection from the upper and lower frame section (14, 16, 18, 20) is formed by rod sections which can be displaced into one another.

4. A device according to one of claims 1 to 3, characterised in that the upper frame section (18, 20) is connectable to the roof or a lateral column of the car body with at least one screw (66) or a snap connection (36).

5. A device according to one of claims 1 to 4, characterised in that the upper frame section (18, 20) at the upper end has a tubular projection (68, 70) on the side facing the car body.

6. A device according to one of claims 1 to 5, characterised in that the ends of the telescopically cooperating profile sections, which face one another, are so formed that the upper frame section (28) with the lower one forms an obtuse angle and the upper frame section is arranged approximately vertically when it is in the upper position.

7. A device according to claim 6, characterised in that the ends of the hollow profile can be fixed against one another via a screw connection (64).

8. A device according to one of claims 1 to 7, characterised in that the lower frame section (14, 16) in a second position is releasably attachable on the rear side of the back rest (34, 42) tilted forwards, uprightly on this.

9. A device according to claim 8, characterised in that in the back rest (34, 32) there is mounted a guide (38, 40, 44, 46) on which a guiding section of the lower frame section (14, 16) is slidably adjustable between a stop in the lower and a stop in the upper region of the back rest (34, 42).

10. A device according to claim 9, characterised in that guide is formed by at least two parallely distanced channel-like rails, in which sliding blocks or likewise of the lower frame section (14, 16) are guided.

11. A device according to claim 2 and one of claims 8 to 10, characterised in that with a protective frame (10) in the forward position and a protective frame (12) in the rear position the upper frame sections (18, 20) are connectable via a connection strut (80).

12. A device according to claim 11, characterised in that the strut (80) at the ends comprises approximately perpendicularly standing sections which engage approximately fitting into the hollow profile of the upper frame sections (18, 20).

13. A device according to claim 11 or 10, characterised in that in the upper connecting strut (80) there is mounted roll (82) comprising a unrollable network (84) or likewise and on the lower edge of the network (84) there are provided means for mounting to the floor of the car body.

14. A device according to one of claims 11 to 13, characterised in that on one end of the strut (80) there is linked a telescopic rod (86) which extends from the upper end section (18) in the forward position to a mounting position (96) in the region of the folded up back rest.

15. A device according to one of claims 1 to 14, characterised in that between the lower frame section (14, 16) and the rear side of the back rest (34, 42) snap connection means (36, 48) act in order to maintain the lower frame section to bear on the back rest (34, 42).

## Revendications

1. Séparation de protection de l'espace situé derrière les sièges avant ou les sièges arrière d'une voiture automobile, comportant les caractéristiques suivantes:
a) un cadre de protection (10, 12) en matériau rigide est divisé en une partie inférieure et une partie supérieure (14, 16, 18, 20), lesdites parties pouvant être positionnées de façon téléscopique en étant guidées l'une contre l'autre, pour régler la position en hauteur du cadre de protection (10, 12);
b) la partie inférieure (14, 16) du cadre, dans la position haute du dossier (34, 42) du siège arrière, peut être fixée sur la face arrière du dossier (34, 42), en contact par sa surface;
c) la partie supérieure (18, 20) du cadre peut être positionée entre une position inférieure, dans laquelle elle est largement recouverte par le dossier (34, 42), et une position supérieure, dans laquelle elle touche le toît de la carrosserie, et
d) la partie supérieure (18, 20) du cadre, dans sa position supérieure, peut être fixée de façon démontable sur une partie de la carrosserie,
caractérisée en ce que, sur un appendice latéral (68, 70) de la partie supérieure (18, 20) du cadre, s'articule une tige (72), réglable en longueur de façon télescopique et pouvant être bloquée à la longueur désirée, pour fixer la partie du cadre sur une colonne arrière ou une autre pièce de la carrosserie.

2. Séparation suivant la revendication 1, caractérisée en ce que, dans le cas d'un dossier (34, 42) divisé, un cadre de protection (10, 12) est associé à chaque partie du dossier.

3. Séparation suivant la revendication 1 ou la revendication 2, caractérisée en ce que le cadre de protection (10, 12) est réalisé dans un matériau constitué de tiges profilées creuses et en ce que la liaison télescopique de la partie inférieure et de la partie supérieure (14, 16, 18, 20) du cadre est formée par des éléments de tige pouvant coulisser les uns dans les autres.

4. Séparation suivant l'une des revendication 1 à 3, caractérisée en ce que la partie supérieure (18, 20) du cadre peut être reliée au toit ou à une colonne latérale de la carrosserie au moyen d'au moins une vis (66) ou d'une liaison à encliquetage (36).

5. Séparation suivant l'une des revendications 1 à 4, caractérisée en ce que la partie supérieure (18, 20) du cadre possède, à son extrémité supérieure, du côté tourné vers la carrosserie, un appendice tubulaire (68, 70).

6. Séparation suivant l'une des revendications 1 à 5, caractérisée en ce que les extrémités tournées l'une vers l'autre des parties profilées agissant ensemble de façon télescopique sont réalisées de telle façon que la partie supérieure (28) du cadre forme, avec la partie inférieure, un angle obtus et que la partie supérieure (28) du cadre est disposée de façon sensiblement verticale quand elle est dans sa position haute.

7. Séparation suivant la revendication 6, caractérisée en ce que les extrémités des profilés creux peuvent être fixées les uns par rapport aux autres au moyen d'une liaison par vis (64).

8. Séparation suivant l'une des revendications 1 à 7, caractérisée en ce que la partie inférieure (14, 16) du cadre peut, dans une deuxième position, être placée debout sur la face arrière du dossier (34, 42) basculé vers l'avant, en étant amovible par rapport à ce dernier.

9. Séparation suivant la revendication 8, caractérisée en ce que, dans le dossier (34, 42) est placé un guidage (38, 40, 44, 46) sur lequel peut être réglé par coulissement un élément de guidage de la partie inférieure (14, 16) du cadre, entre une butée située dans la zone inférieure et une butée située dans la zone supérieure du dossier (34, 42).

10. Séparation suivant la revendication 9, caractérisée en ce que le guidage est constitué d'au moins deux rails en forme de canal, disposés à une certaine distance parallèlement l'un à l'autre, et dans lesquels sont guidés des sabots de glissement, ou similaires, de la partie inférieure (14, 16) du cadre.

11. Séparation suivant la revendication 2 et l'une des revendications 8 à 10, caractérisée en ce que, dans le cas d'un cadre de protection (10) en position avant et d'un cadre de protection (12) en position arrière, les parties supérieures (18, 20) de cadre peuvent être reliées par une tige de liaison (80).

12. Séparation suivant la revendication 11, caractérisée en ce que la tige (80) présente, à ses extrémités, à une certaine distance, des parties sensiblement verticales, qui s'engagent, dans le profilé creux de la partie supérieure (18, 20) du cadre, en s'ajustant sensiblement.

13. Séparation suivant la revendication 11 ou la revendication 12, caractérisée en ce que, dans la tige de liaison (80), est monté un rouleau (82) présentant un filet (84) déroulable, ou similaire, et en ce que, sur le bord inférieur du filet (84), sont prévus des moyens pour le raccordement à la carrosserie.

14. Séparation suivant l'une des revendications 11 à 13, caractérisée en ce qu'à une extrémité de la tige (80), s'articule une tige télescopique (86), qui s'étend depuis la partie de bordure supérieure (18), située en position avant, jusqu'à un endroit de raccordement (96) dans la zone du dossier, enclenché en position haute.

15. Séparation suivant l'une des revendications 1 à 14, caractérisée en ce qu'entre la partie inférieure (14, 16) du cadre et la face arrière du dossier (34, 42) agissent des moyens de liaison à encliquetage (36, 48), pour maintenir la partie inférieure (14, 16) du cadre au contact du dossier (34, 42).
